# EUROPÄISCHE PATENTANMELDUNG

(11) **EP 2 980 365 A1**
(43) Veröffentlichungstag der Anmeldung: **03.02.2016**
(21) Anmeldenummer: 15176267.1
(22) Anmeldetag: 10.07.2015
(51) Int. Cl.: F01D 17/16, F01D 11/00

(54) **LEITSCHAUFEL FÜR EINE GASTRUBINE MIT STIRNSEITIGEN DICHTELEMENTEN**

(30) Priorität: 30.07.2014 DE 102014214914
(71) Anmelder: MTU Aero Engines AG, 80995 München (DE)
(72) Erfinder: Böck, Alexander, 82288 Kottgeisering (DE); Malzacher, Franz, 82194 Gröbenzell (DE)

(57) **Zusammenfassung**

Die Erfindung betrifft eine Leitschaufel (14) für eine Gasturbine (12). Die Leitschaufel (14) umfasst ein Schaufelblatt (24) mit einer Aufnahme (32), in welcher wenigstens ein Dichtelement (34) angeordnet ist, wobei das Dichtelement (34) relativ zum Schaufelblatt (24) zwischen einer Dichtstellung, in welcher das Dichtelement (34) zumindest bereichsweise zur Reduzierung von Leckageströmen zwischen dem Schaufelblatt (24) und einem benachbarten Bauteil aus der Aufnahme (32) herausbewegt ist, und einer Verstaustellung, in welcher das Dichtelement (34) gegenüber der Dichtstellung weiter in die Aufnahme (32) hineinbewegt ist, bewegbar ist. Die Leitschaufel (14) umfasst weiterhin wenigstens einen Fluidkanal (36), über welchen unter Druck stehendes Fluid in die Aufnahme (32) leitbar ist, um das Dichtelement (34) aus der Verstaustellung in die Dichtstellung zu bewegen. Eine Eintrittsöffnung des Fluidkanals (36) ist in einer druckseitigen Oberfläche des Schaufelblatts (14) ausgebildet. Die Erfindung betrifft weiterhin ein Gehäuse (10) sowie eine Gasturbine mit wenigstens einer Leitschaufel (14).

## Beschreibung

Die Erfindung betrifft eine Leitschaufel für eine Gasturbine, insbesondere für ein Flugtriebwerk.

Aus dem Stand der Technik sind Leitschaufeln für Gasturbinen in unterschiedlichen Ausführungen bekannt. Leitschaufeln werden derart in einem Gehäuse einer Gasturbine montiert, dass das Schaufelblatt jeder Leitschaufeln in einem Strömungskanal des Gehäuses der Gasturbine angeordnet ist und die Anströmung eines stromab liegenden Rotors verändert. Hierdurch kann der Wirkungsgrad der Gasturbine verbessert werden. Ein Problem stellen dabei die Spalte zwischen den Schaufelblättern und den benachbarten, den Strömungskanal bzw. Ringraum begrenzenden Gehäusebauteilen dar. Diese Spalte führen zu Überströmungsverlusten, die die mögliche Wirkungsgraderhöhung sogar vollständig kompensieren können.

Daher ist es beispielsweise aus der US 2009/0074563 A1 bekannt, die Leitschaufeln mit jeweiligen Dichtelementen zu versehen. Die Dichtelemente sind in stirnseitigen Aufnahmen der Schaufelblätter angeordnet und können zwischen einer Dichtstellung, in welcher das Dichtelement zumindest bereichsweise zur Reduzierung von Leckageströmen zwischen dem Schaufelblatt und einem benachbarten Gehäusebauteil aus der Aufnahme herausbewegt ist, und einer Verstaustellung, in welcher das Dichtelement gegenüber der Dichtstellung weiter in die Aufnahme hineinbewegt ist, verstellt werden. Die Leitschaufeln sind innen hohl ausgebildet und werden während des Betriebs der zugeordneten Gasturbine mit Kühlluft durchströmt. Zwischen dem inneren Hohlraum der Leitschaufeln und der stirnseitigen Aufnahme befindet sich eine Trennwand, die durch mehrere Fluidkanäle durchbrochen ist. Über diese Fluidkanäle wird ein Teil der Kühlluft in die Aufnahme geleitet, wodurch das Dichtelement radial nach außen aus der Verstaustellung in die Dichtstellung bewegt wird, um den sogenannten Fahnenspalt zwischen dem Schaufelende des Schaufelblatts und dem benachbarten Gehäusebauteil zu reduzieren.

Als nachteilig an den bekannten Leitschaufeln ist der Umstand anzusehen, dass nur hohle bzw. innerlich gekühlte Leitschaufeln auf diese Weise mit bewegbaren Dichtelementen versehen werden können. Darüber hinaus übt die verwendete Kühlluft prinzipbedingt einen vergleichsweise hohen Druck auf das Dichtelement aus, wodurch dieses unnötig hohem Verschleiß ausgesetzt ist.

Aufgabe der vorliegenden Erfindung ist es, eine Leitschaufel der eingangs genannten Art anzugeben, welche eine flexiblere und verbesserte Spaltabdichtung ermöglicht. Weitere Aufgaben der Erfindung bestehen darin, ein Gehäuse für eine Gasturbine mit wenigstens einer derartigen Leitschaufel sowie eine Gasturbine mit wenigstens einer solchen Leitschaufel anzugeben.

Die Aufgaben werden erfindungsgemäß durch eine Leitschaufel mit den Merkmalen des Patentanspruchs 1, ein Gehäuse mit den Merkmalen des Patentanspruchs 8 sowie durch eine Gasturbine gemäß Patentanspruch 10 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Leitschaufel als vorteilhafte Ausgestaltungen des Gehäuses und der Gasturbine anzusehen sind.

Eine Leitschaufel, welche eine flexiblere und verbesserte Spaltabdichtung ermöglicht, ist gemäß einem ersten Aspekt der Erfindung dadurch geschaffen, dass eine Eintrittsöffnung des Fluidkanals in einer druckseitigen Oberfläche des Schaufelblatts ausgebildet ist. Mit anderen Worten ist es erfindungsgemäß vorgesehen, dass der Fluidkanal nicht innerhalb des Schaufelblatts zwischen einem Kühlraum und der Aufnahme verläuft, sondern dass der Fluidkanal die Aufnahme fluidisch mit der druckseitigen Oberfläche des Schaufelblatts verbindet. Hierdurch können sowohl innengekühlte, als auch ungekühlte Leitschaufeln mit dem verstellbaren Dichtelement versehen werden. Darüber hinaus können auch bereits vorhandene Leitschaufeln ohne derartige Aufnahmen und Dichtelemente einfach nachgerüstet werden, da lediglich die Aufnahme in das Schaufelblatt eingebracht und über den Fluidkanal mit der druckseitigen Oberfläche des Schaufelblatts verbunden werden braucht. Während des Betriebs einer zugeordneten Gasturbine entsteht somit innerhalb der Aufnahme des Schaufelblatts ein austreibender Fluidstrom, der das Dichtelement auch gegen die Schwerkraft aus der Aufnahme heraus in die Dichtstellung bzw. in Anlage mit einem benachbarten Bauteil treibt und somit zu einer Reduzierung oder sogar einem vollständigen Verschließen des Fahnenspalts mit einer entsprechende Wirkungsgradsteigerung führt. Durch die vergleichsweise geringen Anpresskräfte, die sich nur durch den Druckunterschied über die Leitschaufel selbst ergeben, wird der Verschleiß des Dichtelements dabei zudem erheblich reduziert. Das Dichtelement ist dabei vorzugsweise als Dichtplatte ausgebildet.

Weitere Vorteile ergeben sich, indem die Leitschaufel als variable Leitschaufel ausgebildet ist. Variabel einstellbare Leitschaufeln, das heißt Leitschaufeln, die gegenüber dem Gehäuse verstellbar bzw. um eine Drehachse der Leitschaufel verdrehbar sind, ermöglichen in einer Gasturbine insbesondere die Optimierung der Schluckfähigkeit der Gasturbine für unterschiedliche Betriebspunkte, wodurch der Treibstoffverbrauch über eine Mission, das heißt über die Aneinanderreihung unterschiedlicher Betriebspunkte, stark gesenkt werden kann. Durch die vergleichsweise geringen Anpresskräfte auf das Dichtelement, die sich nur durch den Druckunterschied über die Leitschaufel selbst ergeben, wird der Verschleiß des Dichtelements dabei im Fall einer als variable Leitschaufel ausgebildeten Leitschaufel besonders stark reduziert. Im Vergleich zu herkömmlichen verstellbaren Leitschaufeln, die kein bewegliches Dichtelement aufweisen, besitzt die erfindungsgemäße Leitschaufel bedeutende Vorteile. Bei herkömmlichen Verstellleitschaufel müssen in der Regel in demjenigen Wandungsabschnitt des Strömungskanals, welcher der Fahne der Verstellleitschaufel gegenüberliegt, spezielle Konturen bzw. Vertiefungen eingebracht werden, um den Fahnenspalt für jede Stellung der verstellbaren Leitschaufel in einem akzeptablen Bereich zu halten. Derartige Konturen bzw. Vertiefungen in der Wandung des Strömungskanals stellen jedoch eine Abweichung vom idealen Wandungsprofil für die Strömung des Betriebsmediums der Gasturbine dar und führen somit zu einer Verringerung des Wirkungsgrads der Gasturbine. Durch die erfindungsgemäße verstellbare Leitschaufel kann vorteilhaft auf derartige Konturierungen bzw. Vertiefungen verzichtet werden, da sich das bewegliche Dichtelement während des Betriebs der Gasturbine immer zumindest weitgehend an die für die Strömung optimale Kontur der benachbarten Wandung des Strömungskanals anlegen kann. Ferner spielt es bei der erfindungsgemäßen verstellbaren Leitschaufel auch keine Rolle, ob sich die Größe des Fahnenspalts aufgrund wechselnder thermischer Bedingungen in der Gasturbine ändert. Das bewegliche Dichtelement kann sich zumindest näherungsweise unabhängig von der Größe des Fahnenspalts an die angrenzende Wandung des Strömungskanals anlegen und den Fahnenspalt damit zumindest weitgehend verschließen.

In einer weiteren vorteilhaften Ausgestaltung der Erfindung ist vorgesehen, dass die Eintrittsöffnung des Fluidkanals in Strömungsrichtung betrachtet stromab einer Drehachse der variablen Leitschaufel ausgebildet ist. Hierdurch werden ausreichende Anpresskräfte für das Dichtelement in allen Betriebsstellungen der Leitschaufel sichergestellt.

Eine besonders hohe Dichtwirkung wird in weiterer Ausgestaltung der Erfindung dadurch ermöglicht, dass die Aufnahme in Strömungsrichtung betrachtet stromab eines in radialer Richtung an das Schaufelblatt angrenzenden Zapfens angeordnet ist.

Weitere Vorteile ergeben sich, wenn die Aufnahme derart ausgebildet ist, dass eine in die Aufnahme mündenden Austrittsöffnung des Fluidkanals durch das Dichtelement nicht vollständig abgedeckt werden kann. Mit anderen Worten ist es vorgesehen, dass die Aufnahme und das Dichtelement derart aneinander angepasst ausgebildet sind, dass das Dichtelement unabhängig von seiner Stellung ein Einströmen des unter Druck stehenden Fluid aus dem Fluidkanal in die Aufnahme nicht vollständig verhindern kann. Hierdurch wird sichergestellt, dass das Dichtelement während des Betriebs der zugeordneten Gasturbine immer mit einem gewissen Mindestdruck beaufschlagt wird. Beispielsweise können das Dichtelement oder die Aufnahme hierzu dachförmig ausgebildet sein bzw. einen Vorsprung aufweisen, sodass die Austrittsöffnung des Fluidkanals nicht vollständig durch das Dichtelement verschließbar ist. Alternativ oder zusätzlich kann das Dichtelement eine Aussparung aufweisen, die im Bereich der Austrittsöffnung des Fluidkanals zu liegen kommt, wenn das Dichtelement in die Verstaustellung bewegt ist.

Weitere Vorteile ergeben sich, indem eine Hauptachse des Fluidkanals zumindest im Wesentlichen rechtwinklig zu einer Hauptachse der Aufnahme angeordnet ist. Mit anderen Worten ist es vorgesehen, dass der Fluidkanal und die Aufnahme derart relativ zueinander angeordnet sind, dass das unter Druck stehende Fluid durch den Fluidkanal in die Aufnahme einströmt und in der Aufnahme um einen Winkel von etwa 80°-100° umgelenkt wird. Hierdurch wird eine möglichst gleichmäßige Druckbeaufschlagung des in der Aufnahme angeordneten Dichtelements gewährleistet.

Weitere Vorteile ergeben sich, indem die erfindungsgemäße Leitschaufel als Verdichterleitschaufel und/oder als Turbinenleitschaufel ausgebildet ist. Mit anderen Worten kann das erfindungsgemäße Dichtkonzept sowohl in einem Verdichter als auch in einer Turbine einer Gasturbine realisiert werden.

Ein zweiter Aspekt der Erfindung betrifft ein Gehäuse für eine Gasturbine, wobei das Gehäuse einen Strömungskanal aufweist, in welchem ein Schaufelblatt wenigstens einer Leitschaufel angeordnet ist, wobei das Schaufelblatt eine Aufnahme umfasst, in welcher wenigstens ein Dichtelement angeordnet ist, das relativ zum Schaufelblatt zwischen einer Dichtstellung, in welcher das Dichtelement zumindest bereichsweise zur Reduzierung von Leckageströmen zwischen dem Schaufelblatt und einem benachbarten, den Strömungskanal begrenzenden Gehäusebauteil aus der Aufnahme herausbewegt ist, und einer Verstaustellung, in welcher das Dichtelement gegenüber der Dichtstellung vom benachbarten Gehäusebauteil weg in die Aufnahme hineinbewegt ist, bewegbar ist, und wobei die Leitschaufel wenigstens einen Fluidkanal umfasst, über welchen unter Druck stehendes Fluid in die Aufnahme leitbar ist, um das Dichtelement aus der Verstaustellung in die Dichtstellung zu bewegen. Erfindungsgemäß ist es dabei vorgesehen, dass die wenigstens eine Leitschaufel gemäß dem ersten Erfindungsaspekt ausgebildet ist. Die sich hieraus ergebenden Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts anzusehen sind. Umgekehrt sind vorteilhafte Ausgestaltungen des zweiten Erfindungsaspekts als vorteilhafte Ausgestaltungen des ersten Erfindungsaspekts anzusehen.

In einer vorteilhaften Ausgestaltung der Erfindung ist vorgesehen, dass das Dichtelement der Leitschaufel derart ausgebildet ist, dass das Dichtelement in der Dichtstellung an einem angrenzenden Gehäusebauteil anliegt und in radialer Richtung der Leitschaufel unterhalb der in die Aufnahme mündenden Austrittsöffnung des Fluidkanals angeordnet ist. Während des Betriebs einer zugeordneten Gasturbine wird hierdurch sichergestellt, dass das Dichtelement in der Dichtstellung mit einem definierten Mindestdruck beaufschlagt und zuverlässig in der Dichtstellung gehalten wird. Unter dem Begriff "anliegt" kann in diesem Zusammenhang auch verstanden werden, dass ein sehr kleiner Restspalt zwischen dem Dichtelement und dem ihm angrenzenden Gehäusebauteil bestehen bleibt, durch welchen eine geringe Leckageströmung durchtreten kann. In diesem Fall würde das Dichtelement den Spalt nicht vollständig abdichten, jedoch die Strömung durch den Fahnenspalt erheblich drosseln. Der Restspalt weist dabei vorzugsweise eine Spalthöhe auf, die höchstens ein Viertel, weiter bevorzugt höchstens ein Achtel, noch weiter bevorzugt höchstens ein Zehntel, der Spalthöhe des Fahnenspalts beträgt, welcher ohne das Vorhandensein des erfindungsgemäßen Dichtelements zwischen der Leitschaufel und dem der Leitschaufel gegenüberliegenden Gehäusebauteil bestehen würde. Dadurch, dass ein kleiner Restspalt bestehen bleibt, schwimmt das Dichtelement quasi auf einem Luftpolster, so dass beim Verstellen der Leitschaufel ein direkter Reibkontakt zwischen Dichtelement und Gehäusebauteil vermieden wird, was das Verstellen erleichtert und Reibverschleiß verhindert.

Ein dritter Aspekt der Erfindung betrifft eine Gasturbine, insbesondere ein Flugtriebwerk, zum Beispiel für ein Flugzeug, einen Helikopter, eine Drohne oder ein anderes fliegendes Gerät, mit wenigstens einer Leitschaufel gemäß dem ersten Erfindungsaspekt und/oder mit wenigstens einem Gehäuse gemäß dem zweiten Erfindungsaspekt. Die sich hieraus ergebenden Merkmale und deren Vorteile sind den Beschreibungen des ersten bzw. des zweiten Erfindungsaspekts zu entnehmen, wobei vorteilhafte Ausgestaltungen des ersten bzw. des zweiten Erfindungsaspekts als vorteilhafte Ausgestaltungen des dritten Erfindungsaspekts anzusehen sind.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Schnittansicht durch ein Gehäuse einer Gasturbine, wobei eine Leitschaufel und eine Laufschaufel eines Rotors erkennbar sind;
- Fig. 2: eine schematische Schnittansicht des in Fig. 1 gezeigten Details II;
- Fig. 3: eine schematische und ausschnittsweise Perspektivansicht zweier erfindungsgemäßer Leitschaufeln;
- Fig. 4: eine schematische Schnittansicht einer mit einem Dichtelement versehenen Aufnahme der erfindungsgemäßen Leitschaufel; und
- Fig. 5: eine schematische Seitenansicht einer alternativen Ausgestaltung der Aufnahme, in welcher das Dichtelement angeordnet ist.

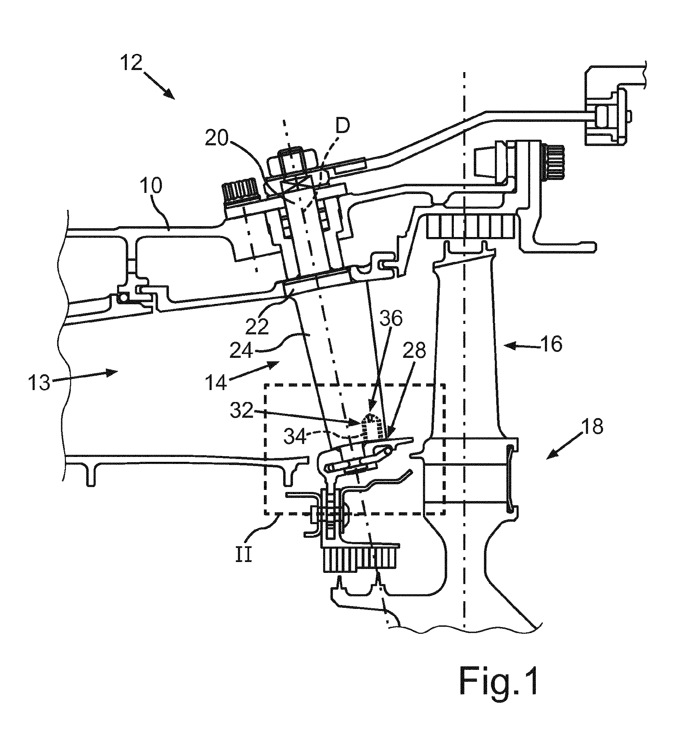

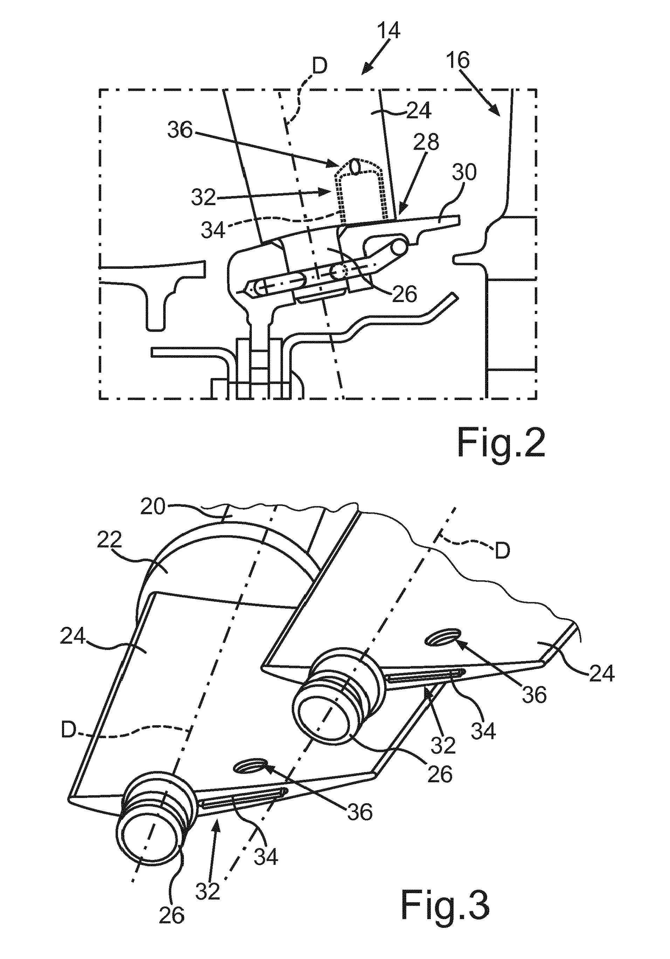

Fig. 1 zeigt eine schematische Schnittansicht durch ein Gehäuse 10 einer Gasturbine 12, wobei exemplarisch eine erfindungsgemäße Leitschaufel 14 und eine stromab liegende Laufschaufel 16 eines Rotors 18 gezeigt sind. Fig. 1 wird im Folgenden in Zusammenschau mit Fig. 2 erläutert werden, welche eine schematische Schnittansicht des Details II zeigt. Man erkennt, dass die Leitschaufel 14 im gezeigten Ausführungsbeispiel als variable Leitschaufel 14 ausgebildet ist und um eine Drehachse D verdreht werden kann. Zu diesem Zweck umfasst die Leitschaufel 14 eine radial äußere Welle 20, die drehbar im Gehäuse 10 gelagert ist. An die Welle 20 schließen in radialer Richtung ein Schaufelteller 22 und ein Schaufelblatt 24 an, wobei das Schaufelblatt 24 in einem Strömungskanal 13 des Gehäuses 10 angeordnet ist. Radial unterhalb des Schaufelendes des Schaufelblatts 24 befindet sich ein Zapfen 26, über den die Leitschaufel 14 ebenfalls drehbar am Gehäuse 10 gelagert ist.

Zur Abdichtung eines Spalts 28 zwischen der radial unteren Stirnseite des Schaufelblatts 24 und dem benachbarten, als Ringraumsegment ausgebildeten Gehäusebauteil 30, weist die Leitschaufel 14 eine Aufnahme 32 im Schaufelblatt 24 auf, in welcher ein vorliegend als Dichtplatte ausgebildetes Dichtelement 34 angeordnet ist. Das Dichtelement 34 kann in der Aufnahme 32 relativ zum Schaufelblatt 24 in eine Dichtstellung bewegt werden, in welcher das Dichtelement 34 zur Reduzierung von Leckageströmen durch den Spalt 28 zwischen dem Schaufelblatt 24 und dem benachbarten Gehäusebauteil 30 teilweise aus der Aufnahme 32 herausbewegt ist und am Gehäusebauteil 30 anliegt. Umgekehrt kann das Dichtelement 34 in die Aufnahme 32 hinein in eine Verstaustellung bewegt werden, wodurch der Spalt 28 zumindest teilweise freigegeben wird.

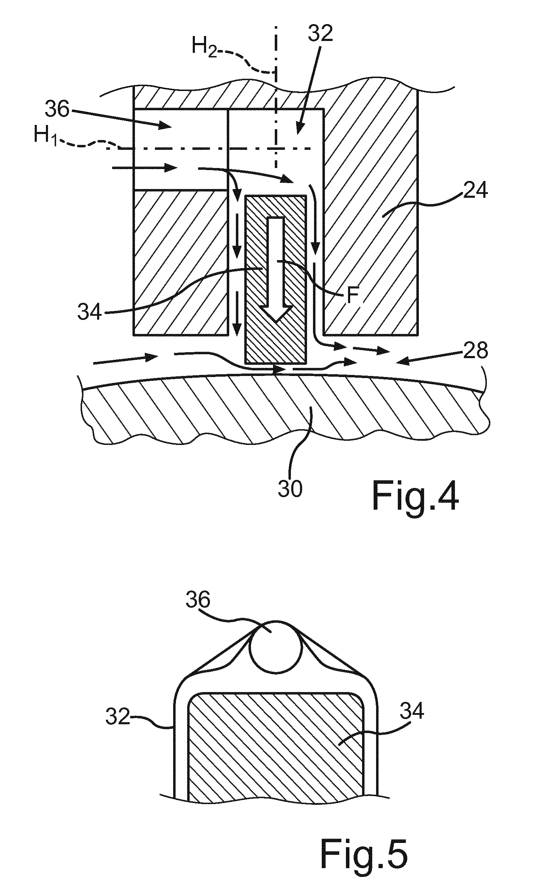

Um das Dichtelement 34 in die Dichtstellung zu bewegen, ist ein Fluidkanal 36 vorgesehen, über welchen während des Betriebs der Gasturbine 12 unter Druck stehendes Fluid in die Aufnahme 32 geleitet wird. Wie man insbesondere in Fig. 3 und Fig. 4 erkennt, ist eine Eintrittsöffnung des Fluidkanals 36 in einer druckseitigen Oberfläche des Schaufelblatts 24 ausgebildet. Fig. 3 zeigt hierzu eine schematische und ausschnittsweise Perspektivansicht zweier erfindungsgemäßer Leitschaufeln 14, während Fig. 4 eine schematische Schnittansicht der mit einem Dichtelement 34 versehenen Aufnahme 32 der erfindungsgemäßen Leitschaufel 14 zeigt. Die Eintrittsöffnung des Fluidkanals 36 befindet sich in Strömungsrichtung des Betriebsfluids der Gasturbine 12 betrachtet stromab der Drehachse D der variablen Leitschaufel 14 sowie stromab des Zapfens 26. Insbesondere aus Fig. 4 wird zudem deutlich, dass eine Hauptachse H1 des Fluidkanals 36 zumindest im Wesentlichen rechtwinklig zu einer Hauptachse H2 der Aufnahme 32 angeordnet ist. Hierdurch strömt das unter Druck stehende Fluid in einem rechten Winkel in die Aufnahme 32, wird in dieser umgeleitet und drückt das Dichtelement 34 mit einer Anpresskraft F in die Dichtstellung. Dies ist in Fig. 4 mit entsprechenden Pfeilen symbolisiert. Man erkennt in Fig. 4 weiterhin, dass eine radiale Oberkante des Dichtelements 34 in der Dichtstellung auf der Höhe einer Unterseite des Fluidkanals 36 angeordnet ist. Dadurch ist der Fluidkanal 36 vollständig freigegeben, so dass das gesamte Fluidvolumen auf das Dichtelement 34 geleitet wird. Die Anpresskraft F wird dabei in erster Linie durch den Druckunterschied über die Leitschaufel 14 bewirkt. Aufgrund einer Spielpassung des Dichtelements 34 strömt das Fluid seitlich am Dichtelement 34 vorbei aus der Aufnahme 32 hinaus in den Spalt 28. Grundsätzlich kann die Aufnahme 32 über mehrere Fluidkanäle 36 mit unter Druck stehendem Fluid versorgt werden. Ein einzelner Fluidkanal 36 ist jedoch in der Regel ausreichend und hat den Vorteil einer möglichst geringen strukturellen Schwächung des Schaufelblatts 24.

Durch die vergleichsweise geringe Anpresskraft F des in die Dichtposition bewegten Dichtelements 34 bleibt die Leitschaufel 14 verstellbar, während gleichzeitig der Verschleiß des Dichtelements 34 minimiert wird. Damit wird der Spalt 28 zumindest teilweise abgedichtet, wodurch die Drosselverluste verringert und der Wirkungsgrad der Gasturbine 12 gesteigert werden. Das vorliegend anhand einer Turbinenleitschaufel gezeigte Dichtkonzept ist auch im Verdichter der Gasturbine 12 bzw. bei einer Verdichterleitschaufel anwendbar.

Fig. 5 zeigt eine schematische Seitenansicht einer alternativen Ausgestaltung der Aufnahme 32, in welcher das Dichtelement 34 angeordnet ist. Man erkennt, dass die Aufnahme 32 im gezeigten Ausführungsbeispiel dachförmig ausgebildet ist, so dass das im Wesentlichen quaderförmige Dichtelement 34 den im dachförmigen Bereich angeordneten Fluidkanal 36 auch in der Verstaustellung nicht vollständig verdecken kann. Damit ist sichergestellt, dass das Dichtelement 34 während des Betriebs der zugeordneten Gasturbine immer mit einem gewissen Mindestdruck beaufschlagt wird, der eine in Richtung der Dichtstellung gerichtete Kraft auf das Dichtelement 34 ausübt.

## Patentansprüche

1. Leitschaufel (14) für eine Gasturbine (12), umfassend
- ein Schaufelblatt (24) mit einer Aufnahme (32), in welcher wenigstens ein Dichtelement (34) angeordnet ist, wobei das Dichtelement (34) relativ zum Schaufelblatt (24) zwischen einer Dichtstellung, in welcher das Dichtelement (34) zumindest bereichsweise zur Reduzierung von Leckageströmen zwischen dem Schaufelblatt (24) und einem benachbarten Bauteil aus der Aufnahme (32) herausbewegt ist, und einer Verstaustellung, in welcher das Dichtelement (34) gegenüber der Dichtstellung weiter in die Aufnahme (32) hineinbewegt ist, bewegbar ist; und
- wenigstens einen Fluidkanal (36), über welchen unter Druck stehendes Fluid in die Aufnahme (32) leitbar ist, um das Dichtelement (34) aus der Verstaustellung in die Dichtstellung zu bewegen,
**dadurch gekennzeichnet, dass**
eine Eintrittsöffnung des Fluidkanals (36) in einer druckseitigen Oberfläche des Schaufelblatts (14) ausgebildet ist.

2. Leitschaufel (14) nach Anspruch 1,
**dadurch gekennzeichnet, dass**
diese als variable Leitschaufel (14) ausgebildet ist.

3. Leitschaufel (14) nach Anspruch 2,
**dadurch gekennzeichnet, dass**
die Eintrittsöffnung des Fluidkanals (36) in Strömungsrichtung betrachtet stromab einer Drehachse (D) der variablen Leitschaufel (14) ausgebildet ist.

4. Leitschaufel (14) nach einem der Ansprüche 1 bis 3,
**dadurch gekennzeichnet, dass**
die Aufnahme (32) in Strömungsrichtung betrachtet stromab eines in radialer Richtung an das Schaufelblatt (24) angrenzenden Zapfens (26) angeordnet ist.

5. Leitschaufel (14) nach einem der Ansprüche 1 bis 4,
**dadurch gekennzeichnet, dass**
die Aufnahme (32) derart ausgebildet ist, dass eine in die Aufnahme (32) mündenden Austrittsöffnung des Fluidkanals (36) durch das Dichtelement (34) nicht vollständig abgedeckt werden kann.

6. Leitschaufel (14) nach einem der Ansprüche 1 bis 5,
**dadurch gekennzeichnet, dass**
eine Hauptachse (H1) des Fluidkanals (36) zumindest im Wesentlichen rechtwinklig zu einer Hauptachse (H2) der Aufnahme (32) angeordnet ist.

7. Leitschaufel (14) nach einem der Ansprüche 1 bis 6,
**dadurch gekennzeichnet, dass**
diese als Verdichterleitschaufel und/oder als Turbinenleitschaufel ausgebildet ist.

8. Gehäuse (10) für eine Gasturbine (12), mit einem Strömungskanal (13), in welchem ein Schaufelblatt (24) wenigstens einer Leitschaufel (14) angeordnet ist,
**dadurch gekennzeichnet, dass**
die wenigstens eine Leitschaufel (14) gemäß einem der Ansprüche 1 bis 7 ausgebildet ist.

9. Gehäuse (10) nach Anspruch 8,
**dadurch gekennzeichnet, dass**
das Dichtelement (34) der Leitschaufel (14) derart ausgebildet ist, dass das Dichtelement (34) in der Dichtstellung an einem angrenzenden Gehäusebauteil (30) anliegt und in radialer Richtung der Leitschaufel (14) unterhalb der in die Aufnahme (32) mündenden Austrittsöffnung des Fluidkanals (36) angeordnet ist.

10. Gasturbine (12), insbesondere Flugtriebwerk, mit wenigstens einer Leitschaufel (14) nach einem der Ansprüche 1 bis 7 und/oder wenigstens einem Gehäuse (10) nach Anspruch 8 oder 9.
